# EUROPÄISCHE PATENTSCHRIFT

(11) **EP 0 780 939 B1**
(45) Veröffentlichungstag und Bekanntmachung des Hinweises auf die Patenterteilung: **15.09.1999**
(21) Anmeldenummer: 96116226.0
(22) Anmeldetag: 10.10.1996
(51) Int. Cl.: H02B 1/052

(54) **Gehäuse zum Ansetzen an eine Tragschiene**
Housing for mounting on a mounting rail
Boîtier pour le montage sur un rail de support

(30) Priorität: 23.12.1995 DE 19548335
(43) Veröffentlichungstag der Anmeldung: 25.06.1997
(73) Patentinhaber: BOPLA GEHÄUSE SYSTEME GmbH, D-32257 Bünde (DE)
(72) Erfinder: Ransiek, Holger, 32257 Bünde (DE)
(74) Vertreter: Thielking, Bodo, Dipl.-Ing.

(56) Entgegenhaltungen:
- DE-A- 2 337 351
- DE-A- 2 428 518
- DE-U- 8 704 865
- DE-U- 29 506 579

## Beschreibung

Die Erfindung betrifft ein Gehäuse zum Ansetzen an eine Tragschiene.

Derartige Gehäuse enthalten üblicherweise elektrische oder elektronische Bauelemente und werden vorzugsweise in elektrischen Schaltschränken eingesetzt.

Bei dem Gehäuse der als bekannt vorausgesetzten Art erweist es sich als nachteilig, daß es für ein Bewegen des Riegels in seine Halteposition erforderlich ist, diesen Riegel in der Einsetzposition des Gehäuses aus der Vorrastposition mittels eines Werkzeuges zu lösen, damit der Riegel unter Federvorspannung in die Halteposition einfallen, also den Tragschienenschenkel hintergreifen kann.

Eine Gehäuse zum Ansetzen an eine Tragschiene mit einem an der Gehäuserückseite gegen die Kraft einer Rückstellfeder quer zur Tragschienebeweglichen Riegel mit einem Rastbereich zum Hintergreifen der Tragschiene von einer Seite, wobei ein weiterer Rastbereich zum Hintergreifen der Tragschiene von der gegenüberliegenden Seite vorgesehen ist und wobei der Riegel in einer vorgespannten Rastposition fixierbar ist, in der der Rastbereich außer Eingriff mit der Tragschiene liegt, wobei der vorgespannte Riegel beim Ansetzen des Gehäuses an die Tragschiene aus der vorgespannten Rastposition gelöst wird und mit seinem Rastbereich in die Halteposition an der Tragschiene fällt, ist aus DE-A-2 337351 bekannt.

Ausgehend von diesem Stand der Technik liegt der Erfindung die Aufgabe zugrunde, ein Gehäuse der als bekannt vorausgesetzten Art so auszubilden, daß es ein Ansetzen des Gehäuses und Fixieren des Gehäuses in der gewünschten Halteposition ermöglicht, ohne daß beim Einsetzvorgang zusätzliche Manipulationen zur Betätigung des Riegels erforderlich sind.

Die Lösung dieser Aufgabe erfolgt mit den Merkmalen des Anspruchs 1.

Die erfindungsgemäße Lösung ermöglicht ein einfaches Erreichen der Vorrastposition, indem der gegen Federkraft ausgezogene Riegel geringfügig quer zu seiner Verschiebeebene verschwenkt und mit einem Rastansatz zum Anlegen an einen ortsfesten Gegenbereich gebracht wird. Ein gegenüber dem Rastbereich vorstehender Ansatz des Riegels, der in der vorgespannten Rastposition den zu hintergreifenden Tragschienenschenkel zumindest teilweise überdeckt, sorgt dafür, daß er beim Ansetzen des Gehäuses an der Tragschiene auf dem Tragschienenschenkel aufliegt. Dies hat zur Folge, daß der Riegel aus seiner vorgerasteten und verschwenkten Lage wieder in seine Verschiebeebene zurückverschwenkt wird und mit seinem Rastbereich in die Halteposition an der Tragschiene einfallen kann.

Gemäß einer Ausgestaltung der Erfindung ist der dem Riegel gegenüberliegende Rastbereich am Gehäuse nicht starr ausgebildet, sondern in gleicher Weise als verschiebbarer, vorspannbarer Riegel.

Weitere bevorzugte Ausgestaltungen der Erfindung ergeben sich aus den weiteren Unteransprüchen.

Nachstehend wird eine bevorzugte Ausführungsform der Erfindung anhand der Zeichnung im einzelnen beschrieben. Es zeigen:
- Figur 1 -: eine erste Ausführungsform der Erfindung in einem Schnitt, der senkrecht zur Längsebene einer erst in Figur 4 dargestellten Tragschiene geführt ist, also senkrecht ebenfalls zu der Gehäuserückwand,
- Figur 2 -: die Darstellung gemäß Figur 1 mit einem teilweise ausgezogenen Riegel,
- Figur 3 -: einen zu Figuren 1 und 2 parallel verlaufenden, benachbarten Schnitt, in dem der Riegel in Vorrastposition gezeigt ist,
- Figur 4 -: die Darstellung gemäß Figur 3 mit eingezeichneter Tragschiene,
- Figur 5 -: die Darstellung gemäß Figur 4 mit dem Riegel in Halteposition,
- Figur 6 -: eine zu Figur 3 analoge Darstellung mit zwei gleichartigen, einander gegenüberliegenden Riegeln,
- Figur 7 -: eine zu Figur 4 analoge Darstellung mit zwei Riegeln,
- Figur 8 -: eine zu Figur 5 analoge Darstellung mit zwei Riegeln.

In den Zeichnungen sind gleiche oder einander entsprechende Teile jeweils mit den gleichen Bezugszeichen versehen. Sie unterscheiden sich im Bedarfsfall lediglich durch Hochstriche voneinander.

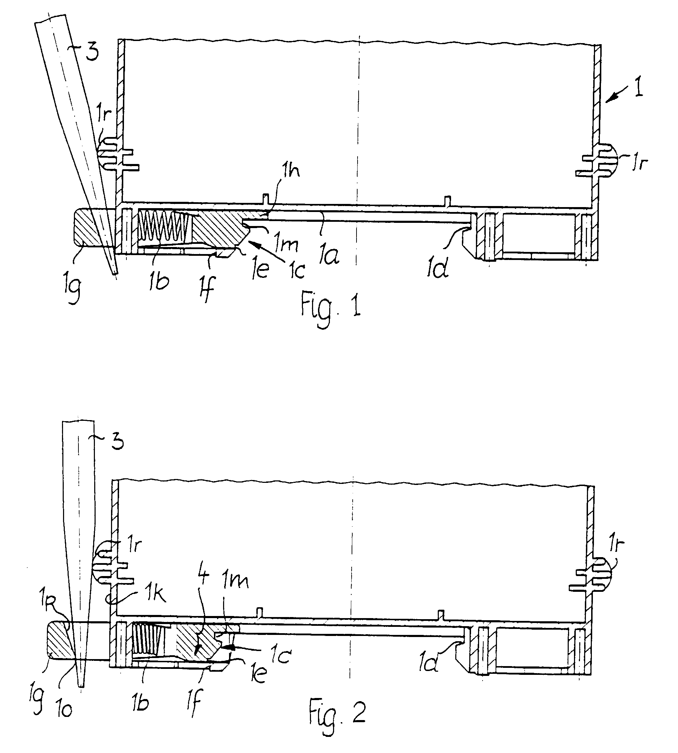

### Zunächst zu Figuren 1 bis 5:

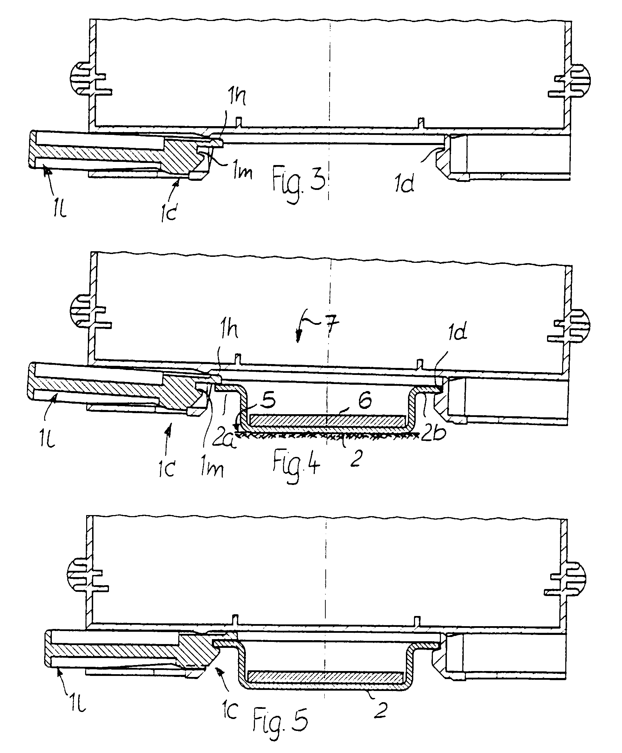

Ein Gehäuse 1 weist an seiner Gehäuserückwand 1a einen ortsfesten Rastbereich 1d auf und einen durch einen Riegel 1c gebildeten Rastbereich. Der Riegel 1c ist quer zur Längsebene einer Tragschiene 2 mit abgekröpften Schenkeln 2a und 2b verschieblich. Die Tragschiene 2 ist mit ihrem Basisschenkel an einer in Figur 4 angedeuteten Auflagefläche 5 befestigt und wird von der Rückseite von einer Halteplatte 6 angeklemmt, die von nicht dargestellten Befestigungsschrauben durchsetzt ist.

Ein Riegel 1c besitzt einen Rastbereich 1m, der in der Halteposition den Schenkel 2a der Tragschiene hintergreift. An dem Riegel 1c ist ein über den Rastbereich 1m vorspringender Ansatz 1h vorgesehen. Weiterhin besitzt der Riegel, der von einer Druckfeder 1b vorgespannt wird und quer zur Gehäuserückwand verschieblich in einem angeformten Gehäusebereich geformt ist, einen Rastansatz 1e. Auf der Rückseite besitzt der Riegel einen über die Gehäuseseitenwand 1k vorragenden Bereich 1g, der eine Öse 1p umfaßt. Diese Öse weist eine schräg nach hinten einwärts verlaufende Außenfläche auf, die eine Anlagekante 1o aufweist. Die Anlagekante 1o ist so angeordnet, daß bei einem Anlegen eines Werkzeugs, beispielsweise des dargestellten Schraubziehers 3, im ausgezogenen Zustand der Riegel 1c in die Position gemäß Figur 3 verschwenkt und in dieser Position mit einem Rastansatz 1e an einem ortsfesten und gehäusefesten Gegenbereich 1f anliegt. Der Pfeil 4 symbolisiert in Figur 2 die Ausschwenkbewegung in die Vorrastposition.

Mit 11 (siehe Figur 3) ist ein Randbereich des Riegels bezeichnet, der auch als Handgriffbereich dienen kann.

Der Ansatz 1h liegt in der Vorrastposition gemäß Figuren 3 und 4 lediglich so weit zurückgezogen, daß er bei gegenüberliegendem aufgeschobenem Rastbereich 1d vor dem Schenkel 2a der Tragschiene 2 liegt und diesen überdeckt. Wenn das Gehäuse zum Fixieren an der Tragschiene in Richtung des Pfeils 7 geschwenkt wird (vgl. Figur 4), wird der Riegel 1c aus seiner Vorrastposition gelöst und kann in die Halteposition einfallen, die in Figur 5 dargestellt ist.

Mit 1r ist ein Auflagebereich für den Schraubenzieher 3 oder ein anderes, zum Ausziehen und Verschwenken des Riegels 1c in die Vorrastposition geeignetes Werkzeug bezeichnet.

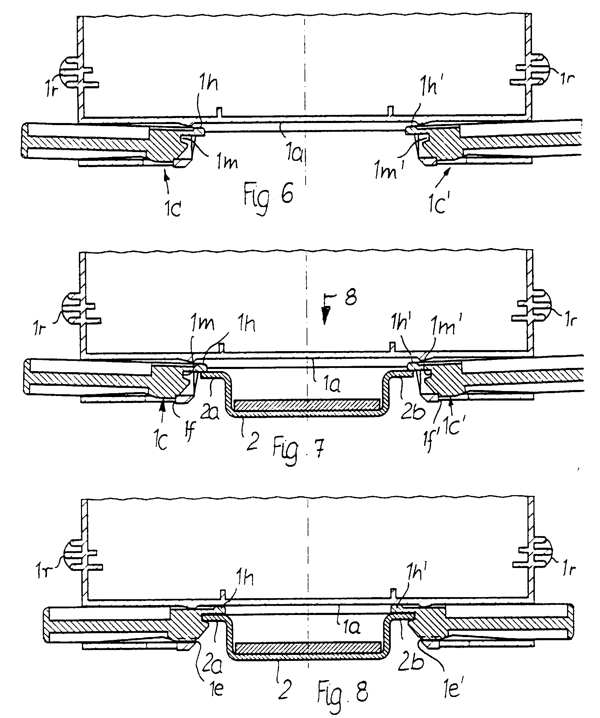

Die Ausführung des zweiten Riegels 1c' in der alternativen Ausführungsform gemäß Figuren 6 bis 8 entspricht in ihrem Aufbau identisch der Anordnung und Ausbildung des Riegels 1c. Einer ergänzende Beschreibung dieses Riegels 1c' und seiner Wirkung bzw. Zusammenwirkung mit den zugehörigen gehäusefesten Bereichen bedarf es demnach nicht.

Wesentlich ist lediglich, daß bei dieser Ausführungsform die Ansätze 1h und 1h' in den dargestellten Vorrastpositionen gemäß Figuren 6 und 7 die beiden Tragschienenschenkel 2a und 2b übergreifen oder überdecken mit der Folge, daß bei einem Ansetzen des Gehäuses 1 in Richtung des Pfeils 8 beide Riegel 1c und 1c' aus der Vorrastposition in Richtung auf die Gehäuserückwand 1a zurückverschwenken und in ihre in Figur 8 dargestellte Halteposition einfallen können. In der Halteposition hintergreifen die Rastbereiche 1m und 1m' der beiden Riegel 1c und 1c' die Tragschienenschenkel 2a und 2b.

## Patentansprüche

1. Gehäuse (1) zum Ansetzen an eine Tragschiene (2) mit einem an der Gehäuserückseite (1a) gegen die Kraft einer Rückstellfeder (1b) quer zur Tragschiene (2) beweglichen Riegel (1c) mit einem Rastbereich (1m) zum Hintergreifen der Tragschiene (2) von einer Seite, wobei ein weiterer Rastbereich (1d) zum Hintergreifen der Tragschiene (2) von der gegenüberliegenden Seite vorgesehen ist und wobei der Riegel (1c) in einer vorgespannten Rastposition fixierbar ist, in der der Rastbereich (1m) außer Eingriff mit der Tragschiene (2) liegt, wobei
der Riegel (1c) quer zu seiner Verschiebeebene verschwenkbar und zum Anlegen eines Rastansatzes (1e) an einen ortsfesten Gegenbereich (1f) ausgebildet ist und wobei der Riegel (1c) einen Ansatz (1h) aufweist, der zum Zentrum der Tragschiene (2) hin derart gegenüber dem Rastbereich (1m) vorsteht und in der vorgespannten Rastposition den zu hintergreifenden Tragschienenschenkel (2a) zumindest teilweise überdeckt, daß der vorgespannte Riegel (1c) beim Ansetzen des Gehäuses (1) an die Tragschiene (2) aus der vorgespannten Rastposition gelöst wird und mit seinem Rastbereich (1m) in die Halteposition an der Tragschiene (2) fällt.

2. Gehäuse nach Anspruch 1,
dadurch gekennzeichnet,
daß auch der weitere Rastbereich zum Hintergreifen der Tragschiene (2) von der gegenüberliegenden Seite als Riegel (1c') ausgebildet ist, der in einer vorgespannten Rastposition fixierbar ist, in der der Rastbereich (1m') außer Eingriff mit der Tragschiene (2) liegt, und daß der Riegel (1c') quer zu seiner Verschiebeebene verschwenkbar und zum Anlegen eines Rastansatzes (1e') an einen ortsfesten Gegenbereich (1f') ausgebildet ist und
wobei der Riegel (1c') einen Ansatz (1h') aufweist, der zum Zentrum der Tragschiene (2) hin derart gegenüber dem Rastbereich (1m') vorsteht und in der vorgespannten Rastposition den zu hintergreifenden Tragschienenschenkel (2b) zumindest teilweise überdeckt, daß der vorgespannte Riegel (1c') beim Ansetzen des Gehäuses (1) an die Tragschiene (2) aus der vorgespannten Rastposition gelöst wird und mit seinem Rastbereich (1m') in die Halteposition an der Tragschiene (2) fällt.

3. Gehäuse nach Anspruch 1 oder 2,
dadurch gekennzeichnet,
daß mindestens ein Riegel (1c) einen über die Gehäuseseitenwand (1k) vorragenden Bereich (1g) aufweist, der als Öse (1p) zum Ansetzen eines Schraubenziehers (3) oder dergleichen Betätigungswerkzeug ausgebildet ist.

4. Gehäuse nach Anspruch 3,
dadurch gekennzeichnet,
daß die Öse (1p) eine nach hinten schräg einwärts verlaufende Außenfläche aufweist mit einer Anlagekante (1o), die so angeordnet ist, daß bei einem Anlegen eines Werkzeugs (3) an dieser Kante der Riegel (1c) in zurückgezogener Position in die Vorrastlage verschwenkt.

5. Gehäuse nach einem oder mehreren der Ansprüche 1 bis 4,
dadurch gekennzeichnet,
daß mindestens ein Riegel (1c) einen über die Gehäuseseitenwand sich erstreckenden Bereich (11) aufweist, der als Handgriffbereich ausgebildet ist.

6. Gehäuse nach einem oder mehreren der Ansprüche 1 bis 5,
dadurch gekennzeichnet,
daß in der Nähe eines jeden Riegels (1c; 1c') an den Gehäuseseitenwänden (1k) angeformte Auflagebereiche (1r) für den Schraubenzieher (3) oder dergleichen Betätigungswerkzeuge vorgesehen ist.

## Claims

1. Housing (1) for fitting on a support rail (2) having a bolt (1c) which is movable at the back (1a) of the housing against the force of a resetting spring (1b) across the support rail (2) and has a detent area (1m) for engaging behind the support rail (2) from one side, wherein a further detent area (1d) is provided for engaging behind the support rail (2) from the opposite side and wherein the bolt (1c) can be fixed in a pretensioned detent position in which the detent area (1m) lies out of engagement with the support rail (2) wherein the bolt (1c) is designed to swivel across its displacement plane and place a detent attachment (1e) against a locally fixed counter area (1f) and wherein the bolt (1c) has an attachment (1h) which protrudes towards the centre of the support rail (2) opposite the detent area (1m) and in the pretensioned detent position covers at least in part the support rail arm (2a) which is to be engaged so that the pretensioned bolt (1c) when fitting the housing (1) on the support rail (2) is released from the pretensioned detent position and falls with its detent area (1m) into the retaining position on the support rail (2).

2. Housing according to claim 1 characterised in that the additional detent area for engaging behind the support rail (2) from the opposite side is also formed as a bolt (1c') which can be fixed in a pretensioned detent position in which the detent area (1m') lies out of engagement with the support rail (2), and that the bolt (1c') is formed to swivel across its displacement plane and place a detent attachment (1e') against a locally fixed counter area (1f') and wherein the bolt (1c') has an attachment (1h') which protrudes towards the centre of the support rail (2) opposite the detent area (1m') and in the pretensioned detent position covers at least in part the support rail arm (2b) which is to be engaged so that the pretensioned bolt (1c') when fitting the housing (1) on the support rail (2) is released from the pretensioned detent position and drops with its detent area (1m') into the retaining position on the support rail (2).

3. Housing according to claim 1 or 2 characterised in that at least one bolt (1c) has an area (1g) projecting over the side wall (1k) of the housing and formed as an eyelet (1p) for fitting a screw driver (3) or similar operating tool.

4. Housing according to claim 3 characterised in that the eyelet (1p) has a rearwardly inwardly inclined outer face with a contact bearing edge (1o) which is arranged so that when placing a tool (3) against this edge the bolt (1c) swivels in the retracted position into the forward detent position.

5. Housing according to one of more of claims 1 to 4 characterised in that at least one bolt (1c) has an area (11) extending over the side wall of the housing and formed as a handle area.

6. Housing according to one or more of claims 1 to 5 characterised in that bearing areas (1r) for the screw driver (3) or similar operating tools are formed on the side walls (1k) of the housing close to each bolt (1c;1c').

## Revendications

1. Boîtier (1) de montage sur un rail support (2) et comprenant un dispositif de verrouillage (1c) déplaçable sur le côté postérieur (1a) du boîtier, transversalement par rapport au rail support (2), en surmontant la force exercée par un ressort de rappel (1b), lequel dispositif de verrouillage (1c) présente une zone d'enclenchement (1m) pour saisir le rail support (2) d'un côté et une zone d'enclenchement (1d) pour saisir le rail support (2) du côté opposé, le dispositif de verrouillage (1c) pouvant être fixé dans une position d'enclenchement précontrainte, dans laquelle la zone d'enclenchement (1m) est hors de prise avec le rail support (2), le dispositif de verrouillage (1c) étant pivotable, transversalement par rapport à son plan de déplacement, et conçu de sorte qu'un épaulement d'arrêt (1e) vienne porter contre une contre-pièce stationnaire (1f), le dispositif de verrouillage (1c) présentant un épaulement (1h) qui fait saillie vers le centre du rail support de sorte que le dispositif de verrouillage (1c) précontraint se trouve détendu et bloqué sur le rail support (2) par sa zone d'enclenchement (1m), lors de la mise en place du boîtier (2) sur le rail support (2).

2. Boîtier selon la revendication 1,
caractérisé en ce que
l'autre zone d'enclenchement est, elle aussi, destinée à saisir le rail support (2) du côté opposé et est conçue sous forme de dispositif de verrouillage (1c') qui peut être fixé dans une position d'enclenchement précontrainte dans laquelle la zone d'enclenchement (1m) est hors de prise avec le rail support (2)
et que le dispositif de verrouillage peut être pivoté transversalement par rapport à son sens de déplacement et est conçu de sorte qu'un épaulement d'arrêt (1e') vienne porter contre une contre-pièce (1f') stationnaire, le dispositif de verrouillage (1c') présentant un appendice (1h') qui fait saillie vers le centre du rail support (2) et, en position précontrainte, recouvre, au moins partiellement, la branche (2a) de celui-ci de sorte que le dispositif de verrouillage (1c) précontraint se trouve détendu et bloqué sur le rail support (2) par sa zone d'enclenchement (1m'), lors de la mise en place du boîtier (1) sur le rail support (2).

3. Boîtier selon la revendication 1 ou 2,
caractérisé en ce
qu'un dispositif de verrouillage (1c), au moins, présente une zone (1g) qui fait saillie au-delà de la paroi latérale (1k) du boîtier et est conçue sous forme de lumière (1p) pour la mise en oeuvre d'un tournevis (3) ou de tout autre outil d'actionnement analgue.

4. Boîtier selon la revendication 3,
caractérisé en ce que
la lumière (1p) possède une surface oblique qui descend en pente vers l'intérieur et présente un bord d'appui (10) qui est disposé de sorte que le dispositif de verrouillage (1c) passe de la position de retrait à la position d'enclenchement préliminaire lors de l'application d'un outil (3) contre ce bord.

5. Boîtier selon une ou plusieurs revendications 1 à 4,
caractérisé en ce
qu'au moins un dispositif de verrouillage (1c) présente une zone (11) s'étendant sur la paroi latérale du boîtier (1) et conçue en forme de zone de préhension.

6. Boîtier selon une ou plusieurs revendications 1 à 5,
caractérisé en ce que
des zones d'appui (1r), formées à partir des parois latérales (1k) du boîtier sont prévues, à proximité de chacun des dispositifs de verrouillage (1c; 1c'), pour la mise en oeuvre d'un tournevis (3) ou d'un outil d'actionnement analogue.
